# EUROPÄISCHE PATENTSCHRIFT

(11) **EP 2 704 935 B1**
(45) Veröffentlichungstag und Bekanntmachung des Hinweises auf die Patenterteilung: **23.08.2017**
(21) Anmeldenummer: 12715670.1
(22) Anmeldetag: 12.04.2012
(51) Int. Cl.: B60W 30/18, B60W 10/04, B60W 10/184

(54) **VERFAHREN ZUM EINSTELLEN DES ANFAHRMOMENTS IN EINEM FAHRZEUG**
METHOD FOR ADJUSTING THE STARTING TORQUE IN A VEHICLE
PROCÉDÉ POUR RÉGLER LE COUPLE DE DÉMARRAGE D'UN VÉHICULE

(30) Priorität: 03.05.2011 DE 102011075111; 18.10.2011 DE 102011084695
(43) Veröffentlichungstag der Anmeldung: 12.03.2014
(73) Patentinhaber: Robert Bosch GmbH, 70442 Stuttgart (DE)
(72) Erfinder: LIMA RAMIREZ, Victor Jose, 70469 Stuttgart (DE)
(86) Internationale Anmeldenummer: PCT/EP2012/056620
(87) Internationale Veröffentlichungsnummer: WO 2012/150111

(56) Entgegenhaltungen:
- EP-A1- 2 082 938
- DE-A1- 10 017 245
- DE-A1-102008 039 779
- DE-A1-102009 018 854

## Beschreibung

Die Erfindung bezieht sich auf ein Verfahren zum Einstellen des Anfahrmoments während des Anfahrens in einem Fahrzeug.

### Stand der Technik

Bekannt sind Antriebs-Schlupf-Regelsysteme (ASR), die über einen Eingriff in das Motormanagement eines Motors in einem Fahrzeug das Antriebsmoment begrenzen, um das Fahrzeug stabil zu halten. Die Begrenzung des Antriebsmomentes erfolgt schlupfabhängig, wobei im Falle niedriger Reibwerte, beispielsweise bei Schnee, das Antriebsmoment stärker herabgesetzt wird.

Voraussetzung für den Eingriff des Antriebs-Schlupf-Regelsystems ist, dass die Geschwindigkeit der angetriebenen Räder eine Sollgeschwindigkeit übersteigt. Beim Anfahren aus dem Stillstand können bei der Antriebs-Schlupf-Regelung Probleme auftreten, da der Sollschlupf im Stillstand konzeptbedingt gegen unendlich geht. In der Praxis wird der Sollschlupf so eingestellt, dass der Motor durch die Antriebs-Schlupf-Regelung nicht abgewürgt wird. Allerdings können hierbei die angetriebenen Räder in einem instabilen Bereich der Reibwert-Schlupfkurve gelangen, wodurch das Anfahren an einem Anstieg auf Schnee oder Eis erschwert und unter Umständen sogar unmöglich gemacht wird.

DE 10 2008 039779 A1 offenbart ein Verfahren zum Begrenzen des Anfahrmoments während des Anfahrens in einem Fahrzeug.

### Offenbarung der Erfindung

Der Erfindung liegt die Aufgabe zugrunde, Anfahrvorgänge in Fahrzeugen auch bei niedrigen Reibwerten stabil durchzuführen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren wird zum Einstellen des Anfahrmoments beim Anfahren in einem Fahrzeug aus dem Stillstand heraus eingesetzt. Mithilfe des Verfahrens ist es möglich, das Fahrzeug aus dem Stillstand heraus zu beschleunigen und auch bei niedrigen Reibwerten, beispielsweise bei schnee- oder eisbedeckter Fahrbahn, das Fahrzeug stabil zu halten. Erreicht wird dies durch eine Limitierung des Anstiegs bzw. Gradienten des tatsächlich wirkenden Ist-Antriebsmomentes, welches im Antriebsmotor der Brennkraftmaschine - in der Regel eine Brennkraftmaschine, gegebenenfalls zusätzlich oder alternativ auch ein Elektromotor - erzeugt wird. Die Limitierung erfolgt dadurch, dass der Anstieg auf einen Maximalanstieg begrenzt wird. Somit wird das vom Fahrer vorgegebene Antriebsmoment nur dann uneingeschränkt umgesetzt, wenn der Anstieg im Ist-Antriebsmoment den Maximalanstieg nicht überschreitet, andernfalls erfolgt die Begrenzung. Liegt dagegen der Anstieg im Ist-Momentenverlauf unterhalb des Maximalanstiegs, erfolgt keine Begrenzung und die Fahrervorgabe wird wie gewünscht umgesetzt.

Diese Vorgehensweise hat den Vorteil, dass das Fahrzeug sich auch bei niedrigen Reibwerten, die zum Beispiel witterungsbedingt bei Schnee und Eis vorliegen, während des Anfahrvorganges sicher und stabil bewegt. Die Beschleunigung vom Stillstand heraus kann ohne Einschränkung der Fahrsicherheit durchgeführt werden. Es ist nicht erforderlich, dass der Fahrer durch eine zurückhaltende Betätigung des Beschleunigungspedals in die Steuerung des Anfahrvorganges eingreift, um den Anfahrvorgang stabil zu halten. Vielmehr wird der Anfahrvorgang auch dann stabil durchgeführt, wenn eine hohe Fahreranforderung vorliegt, die ohne Begrenzung des Ist-Motormomentenanstiegs zu einer Überschreitung der Haftreibung und damit zu Instabilität führen würde, bei dem erfindungsgemäßen Verfahren dagegen innerhalb des Haftreibungsbereichs durchgeführt wird.

Zweckmäßigerweise wird das Verfahren in einem Regel- bzw. Steuergerät durchgeführt, welches Bestandteil eines Fahrerassistenzsystems sein kann, insbesondere eines elektronischen Stabilitätsprogramms (ESP-System). Die Antriebs-Schlupf-Regelung (ASR) kann ohne Modifikation beibehalten werden, da über das ESP-System der Gradient bzw. Anstieg im Ist-Motormomentenverlauf auf den Maximalanstieg begrenzt wird.

Der Maximalanstieg, welcher als Grenzwert für den Gradienten bzw. Anstieg des Ist-Antriebsmomentes vorgegeben wird, hängt von aktuellen Zustands- oder Kenngrößen des Fahrzeugs und/oder der Umgebung des Fahrzeugs ab. Erfindungsgemäß hängt der Maximalanstieg des Ist-Antriebsmoments von der Straßenneigung ab, wobei mit zunehmender Straßenneigung der Maximalanstieg herabgesetzt wird, um ein Durchdrehen der Räder im Falle des Anfahrens am Berg über ein zulässiges Maß hinausgehend zu verhindern. Umgekehrt kann der Maximalanstieg hochgesetzt werden, wenn die Straße nur eine geringe Neigung aufweist. Bei ebener Straße nimmt der Maximalanstieg einen maximal möglichen Wert an.

Zusätzlich oder alternativ kommen weitere Abhängigkeiten des Maximalanstiegs in Betracht, beispielsweise eine Abhängigkeit von der Umgebungstemperatur, indem zum Beispiel bei Minustemperaturen der Maximalanstieg auf einen kleineren Wert gesetzt wird als bei positiven Temperaturen. Hierdurch kann einer möglichen Schnee- bzw. Eissituation Rechnung getragen werden.

Darüber hinaus ist auch ein manueller Eingriff zur Festlegung der Höhe des Maximalanstiegs möglich. Beispielsweise kann über den Fahrer im Fahrzeug ein Sommer- bzw. Winterprogramm eingestellt werden, wodurch entsprechende Kennlinien aktiviert werden und der Maximalanstieg auf einen höheren bzw. niedrigeren Wert gesetzt wird. Auch das gewünschte Fahrverhalten kann auf diese Weise gegebenenfalls eingestellt werden, indem beispielsweise zwischen einem sportlichen und einem Komfort-Verhalten des Fahrzeugs unterschieden wird. Derartige Einstellungen werden entweder manuell vom Fahrer vorgegeben, werksseitig auf Fahrerwunsch eingestellt oder im laufenden Betrieb im Fahrzeug aus Fahrerreaktionen bestimmt.

Gemäß einer weiteren zweckmäßigen Ausführung ist vorgesehen, dass nur der Anstieg des Antriebsmomentes begrenzt wird, nicht jedoch der Maximalwert, welcher vom Fahrer vorgegeben wird. Bei einer wirksamen Begrenzung des Anstiegs wird somit der dem Fahrerwunsch entsprechende Maximalwert aufgrund der flacheren Anstiegskurve erst zu einem späteren Zeitpunkt erreicht. Die absolute Höhe des Motormomentes wird hiervon aber nicht beeinflusst.

Gemäß einer alternativen Ausführung ist es auch denkbar, dass auch die absolute Höhe des Motormomentes auf einen Maximalwert beschränkt wird, insbesondere situationsabhängig, beispielsweise in Abhängigkeit von der Straßenneigung.

Die Dauer der Begrenzung des Maximalanstiegs kann, gemäß weiterer zweckmäßiger Ausführung, begrenzt sein. In Betracht kommt eine zeitliche Limitierung, indem die Begrenzung des tatsächlichen Anstiegs auf den Maximalanstieg nur für eine begrenzte Zeitdauer erfolgt, wobei nach Ablauf der Zeitdauer die Begrenzung entweder vollständig aufgehoben wird, so dass im weiteren Verlauf der Anstieg mit dem vom Fahrerwunsch abgeleiteten Anstieg zusammenfällt, oder der Maximalwert geändert wird, insbesondere heraufgesetzt wird.

Möglich ist es auch, mit dem Erreichen einer Geschwindigkeitsschwelle die Begrenzung auf den Maximalanstieg aufzuheben oder einen neuen Wert des Maximalanstiegs festzulegen. In jedem Fall, also sowohl bei der zeitlichen Begrenzung als auch bei der Begrenzung bis zum Erreichen einer Geschwindigkeitsschwelle, können die entsprechenden Schwellenwerte (Zeitdauer bzw. Geschwindigkeitsschwelle) entweder konstant vorgegeben werden oder von Zustands- bzw. Situationsgrößen abhängen, beispielsweise von der Straßenneigung.

Gemäß einer weiteren, vorteilhaften Ausführung erfolgt die Begrenzung des Ist-Antriebsmoments auf den Maximalanstieg erst dann, wenn ein für das Halten des Fahrzeugs an einer Steigung erforderliches Antriebsmoment erreicht worden ist. Dadurch ist sichergestellt, dass beim Anfahren an einer Steigung in kürzestmöglicher Zeit das zum Halten des Fahrzeugs notwendige Antriebsmoment generiert wird. Erst danach erfolgt die Begrenzung des Anstiegs auf den Maximalanstieg. Bis zu diesem Zeitpunkt ist dagegen auch ein höherer Anstieg möglich, soweit dies vom Fahrer vorgegeben wird.

Gemäß einer weiteren vorteilhaften Ausführung wird beim Anfahren an einer Steigung das Ist-Antriebsmoment in gleicher Weise erhöht wie das aktuell wirkende Bremsmoment im Fahrzeug abgebaut wird. In der Summe ergibt sich hierdurch eine Momentenbilanz gleich null. Hierdurch ist sichergestellt, dass in den ersten Momenten des Anfahrens, wenn das Antriebsmoment erst aufgebaut wird, das an einer Steigung stehende Fahrzeug sich nicht versehentlich in Bewegung setzt. Die Funktion lässt sich insbesondere mit einer sogenannten hillholder-Funktion kombinieren, bei der das Fahrzeug an einer Steigung ohne Bremspedalbetätigung seitens des Fahrers mit aktivem, selbsttätig generierten Bremsdruckaufbau gehalten wird.

Die für die Durchführung des Verfahrens benötigten Größen wie zum Beispiel die Steigung werden insbesondere sensorisch ermittelt, beispielsweise mithilfe von Beschleunigungssensoren.

Weitere Vorteile und zweckmäßige Ausführungen sind den weiteren Ansprüchen, der Figurenbeschreibung und den Zeichnungen zu entnehmen. Es zeigen:
- Fig. 1: ein Schaubild mit dem Verlauf des Antriebsmomentes in Abhängigkeit von der Zeit,
- Fig. 2: ein Ablaufdiagramm mit Verfahrensschritten zur Durchführung des Verfahrens zum Begrenzen des Anstiegs des Ist-Antriebsmomentes auf einen Maximalanstieg.

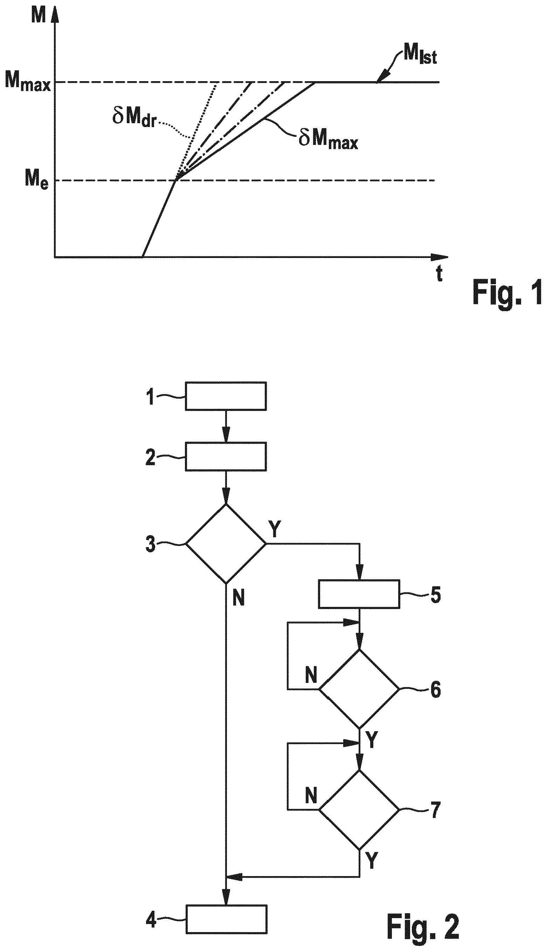

In Fig. 1 ist ein Antriebsmoment-Zeit-Diagramm mit dem Kurvenverlauf des tatsächlich wirkenden Ist-Antriebsmomentes in einem Fahrzeug dargestellt, das vom Antriebsmotor des Fahrzeugs beim Losfahren aus dem Stillstand erzeugt wird. Die Kurve Mᵢₛₜ steigt von null bis zu einem Maximalwert Mₘₐₓ an, welcher dem Fahrerwunsch entspricht. Bis zum Erreichen eines ersten, unterhalb des Maximalwertes Mₘₐₓ liegenden Antriebsniveaus Mₑ wird die Fahrervorgabe ohne Einschränkung umgesetzt. Das erste Antriebsmomentenniveau Mₑ entspricht demjenigen Antriebsmoment, welches erforderlich ist, um das Fahrzeug auf der Steigung zu halten, auf der sich das Fahrzeug aktuell befindet. Das Antriebsmoment Mₑ ist steigungsabhängig, wobei die Höhe der Steigung, auf der das Fahrzeug abgestellt ist, beispielsweise über einen Beschleunigungssensor ermittelt werden kann.

Mit dem Überschreiten des Antriebsmomentes Mₑ, das für das Halten des Fahrzeuges erforderlich ist, beginnt unter bestimmten Voraussetzungen eine Limitierung des Anstieges δM_{dr}, welcher den Fahrerwunsch widerspiegelt, auf einen Maximalanstieg δMₘₐₓ. Mit dieser Limitierung im Anstieg bzw. Gradienten soll Stabilität des Fahrzeuges auch bei niedrigen Reibwerten sichergestellt werden. Die Limitierung auf den Maximalanstieg erfolgt nur, falls die Vorgabe des Fahrers den Maximalanstieg übersteigt. Die Höhe des Maximalanstiegs δMₘₐₓ kann von verschiedenen Zustandsgrößen bzw. Situationsgrößen abhängen, insbesondere von der Steigung, auf der das Fahrzeug abgestellt ist. Mit zunehmender Steigung wird der Gradient δMₘₐₓ kleiner. Daneben kommen aber auch weitere Abhängigkeiten in Betracht, beispielsweise von der Umgebungstemperatur, wobei im Falle von Minustemperaturen der Maximalanstieg δMₘₐₓ ebenfalls herabgesetzt werden kann.

Das Maximalniveau Mₘₐₓ des Motormomentes wird dagegen nicht limitiert, so dass der Anstieg im Motormoment bis zum Erreichen des vom Fahrer gewünschten maximalen Momentes Mₘₐₓ erfolgt.

In Fig. 2 ist ein Ablaufdiagramm mit einzelnen Verfahrensschritten zur Begrenzung des maximalen Anstiegs im Motormomentenverlauf dargestellt. Im ersten Verfahrensschritt 1 wird zunächst die Steigung der Fahrbahn ermittelt, auf der das Fahrzeug abgestellt ist. Im nächsten Verfahrensschritt 2 wird der Fahrerwunsch festgestellt, den der Fahrer über die Betätigung des Beschleunigungspedals vorgibt. Hierbei wird der vom Fahrer gewünschte Anstieg δM_{dr} des Antriebsmomentes ermittelt und im Verfahrensschritt 3 auf Überschreiten des Maximalanstiegs δMₘₐₓ überprüft, welcher den zugeordneten Schwellenwert darstellt, der im vorangegangenen Verfahrensschritt 1 steigungsabhängig berechnet wurde. Ergibt die Abfrage im Verfahrensschritt 3, dass der Anstieg des Motorantriebsmomentes, so wie vom Fahrer gewünscht unterhalb des maximal zulässigen Maximalanstiegs δMₘₐₓ liegt, wird der Nein-Verzweigung ("N") folgend zum Verfahrensschritt 4 fortgefahren und das Motorantriebsmoment ohne Einschränkung der Fahrervorgabe entsprechend umgesetzt.

Sofern dagegen die Abfrage im Verfahrensschritt 3 ergibt, dass der Anstieg δM_{dr} des Motormoments, so wie dies vom Fahrer gewünscht wird, den zugeordneten Maximalanstieg δMₘₐₓ übersteigt, wird der Ja-Verzweigung ("Y") folgend zum Verfahrensschritt 5 fortgefahren, in welchem der Anstieg des tatsächlich wirkenden Ist-Antriebsmomentes auf den Maximalanstieg δMₘₐₓ begrenzt wird.

Im Anschluss an den Verfahrensschritt 5 wird zum Verfahrensschritt 6 fortgefahren, gemäß dem die Begrenzung auf den Maximalanstieg auf eine definierte Zeitdauer limitiert ist. Im Verfahrensschritt 6 erfolgt eine Abfrage, ob diese Zeitdauer bereits abgelaufen ist. Ist dies noch nicht der Fall, wird der Nein-Verzweigung folgend wieder zum Beginn des Verfahrensschrittes 6 zurückgekehrt und die Abfrage in zyklischen Abständen erneut durchlaufen. Ist die Zeitdauer beendet, wird der Ja-Verzweigung folgend zum nächsten Verfahrensschritt 7 fortgefahren. Die Zeitdauer kann ebenfalls von Zustands- bzw. Situationsgrößen abhängen, insbesondere von der Steigung.

Im Verfahrensschritt 7 folgt die zeitliche Begrenzung auf den Maximalanstieg auf das Erreichen einer definierten Geschwindigkeitsschwelle. Solange diese Geschwindigkeitsschwelle noch nicht erreicht ist, wird der Nein-Verzweigung folgend wieder zum Beginn des Verfahrensschrittes 7 zurückgekehrt und der Schritt 7 in zyklischen Abständen erneut durchlaufen. Ist die Geschwindigkeitsschwelle erreicht, wird der Ja-Verzweigung folgend zum nächsten Verfahrensschritt 4 fortgefahren, der das Ende des Verfahrens markiert, wobei im weiteren Verlauf das Motorantriebsmoment ohne Einschränkung und wie vom Fahrer gewünscht umgesetzt wird. Die Geschwindigkeitsschwelle, die der Abfrage im Schritt 7 zugrunde liegt, kann ebenfalls von Zustands- bzw. Situationsgrößen abhängen, insbesondere von der Straßenneigung.

## Patentansprüche

1. Verfahren zum Einstellen des Anfahrmoments während des Anfahrens in einem Fahrzeug, bei dem der Anstieg (δM_{dr}) des tatsächlich wirkenden Ist-Antriebsmoments (Mᵢₛₜ) im Fahrzeug auf einen Maximalanstieg (δMₘₐₓ) begrenzt wird, **dadurch gekennzeichnet, dass** der Maximalanstieg (δMₘₐₓ) des Ist-Antriebsmoments (Mᵢₛₜ) von der Straßenneigung abhängt, wobei mit zunehmender Straßenneigung der Maximalanstieg (δMₘₐₓ) herabgesetzt wird.

2. Verfahren nach Anspruch 1, **dadurch gekennzeichnet, dass** der Maximalanstieg (δMₘₐₓ) des Ist-Antriebsmoments von aktuellen Zustands- oder Kenngrößen des Fahrzeugs und/oder der Umgebung abhängt.

3. Verfahren nach einem der Ansprüche 1 bis 2, **dadurch gekennzeichnet, dass** mit dem Erreichen einer Geschwindigkeitsschwelle die Begrenzung auf den Maximalanstieg (δMₘₐₓ) aufgehoben wird.

4. Verfahren nach einem der Ansprüche 1 bis 3, **dadurch gekennzeichnet, dass** die Begrenzung des Anstiegs (δM_{dr}) auf den Maximalanstieg (δMₘₐₓ) zeitlich limitiert ist.

5. Verfahren nach Anspruch 4, **dadurch gekennzeichnet, dass** nach Ablauf der Zeitdauer die Begrenzung auf den Maximalanstieg (δMₘₐₓ) aufgehoben wird.

6. Verfahren nach einem der Ansprüche 1 bis 5, **dadurch gekennzeichnet, dass** der Maximalwert (Mₘₐₓ) des Ist-Antriebsmoments (Mᵢₛₜ) auf den Maximalwert des vom Fahrer vorgegebenen Antriebsmoments gesetzt wird.

7. Verfahren nach einem der Ansprüche 1 bis 6, **dadurch gekennzeichnet, dass** die Begrenzung des Anstiegs (δM_{dr}) des Ist-Antriebsmoments (Mᵢₛₜ) auf den Maximalanstieg (δMₘₐₓ) erst erfolgt, wenn ein für das Halten des Fahrzeugs an einer Steigung erforderliches Antriebsmoment erreicht worden ist.

8. Verfahren nach einem der Ansprüche 1 bis 7, **dadurch gekennzeichnet, dass** beim Anfahren an einer Steigung das Ist-Antriebsmoment (Mᵢₛₜ) in gleicher Weise erhöht wie das Bremsmoment im Fahrzeug abgebaut wird.

9. Regel- bzw. Steuergerät mit Mitteln zur Durchführung des Verfahrens nach einem der Ansprüche 1 bis 8.

10. Fahrerassistenzsystem, insbesondere ESP-System in einem Fahrzeug mit einem Regel- bzw. Steuergerät nach Anspruch 9.

## Claims

1. Method for adjusting the starting torque during the starting in a vehicle, in which the increase (δM_{dr}) in the actuably acting actual drive torque (M_{act}) in the vehicle is limited to a maximum increase (δMₘₐₓ), **characterized in that** the maximum increase (δMₘₐₓ), in the actual driving torque (M_{act}) depends on the inclination of the road, wherein the maximum increase (δMₘₐₓ) is reduced as the inclination of the road increases.

2. Method according to Claim 1, **characterized in that** the maximum increase (δMₘₐₓ), in the actual driving torque depends on the current status variables or characteristic variables of the vehicle and/or the surroundings.

3. Method according to one of Claims 1 to 2, **characterized in that** the limitation to the maximum increase (δMₘₐₓ) is eliminated when a speed threshold is reached.

4. Method according to one of Claims 1 to 3, **characterized in that** the limitation to the increase (δM_{dr}) is chronologically restricted to the maximum increase (δMₘₐₓ).

5. Method according to Claim 4, **characterized in that** after the expiry of the duration the limitation to the maximum increase (δMₘₐₓ) is eliminated.

6. Method according to one of Claims 1 to 5, **characterized in that** the maximum value (Mₘₐₓ) of the actual driving torque (M_{act}) is set to the maximum value of the drive torque which is predefined by the driver.

7. Method according to one of Claims 1 to 6, **characterized in that** the limitation of the increase (δM_{dr}) in the actual driving toque (M_{act}) to the maximum increase (δMₘₐₓ) is not effected until a drive torque which is necessary for holding the vehicle on an incline has been reached.

8. Method according to one of Claims 1 to 7, **characterized in that** when starting on an incline the actual driving toque (M_{act}) is increased in the same way as the braking torque is reduced in the vehicle.

9. Closed-loop or open-loop control device having means for carrying out the method according to one of Claims 1 to 8.

10. Driver assistance system, in particular ESP system, in a vehicle having a closed-loop or open-loop control device according to Claim 9.

## Revendications

1. Procédé de réglage du couple de démarrage pendant le démarrage d'un véhicule, selon lequel la croissance (δM_{dr}) du couple d'entraînement réel (Mᵢₛₜ) qui agit effectivement dans le véhicule est limitée à une croissance maximale (δMₘₐₓ), **caractérisé en ce que** la croissance maximale (δMₘₐₓ) du couple d'entraînement réel (Mᵢₛₜ) est dépendante de la pente de la chaussée, la croissance maximale (δMₘₐₓ) étant réduite à mesure que la pente de la chaussée augmente.

2. Procédé selon la revendication 1, **caractérisé en ce que** la croissance maximale (δMₘₐₓ) du couple d'entraînement réel dépend de grandeurs d'état ou caractéristiques actuelles du véhicule et/ou de l'environnement.

3. Procédé selon l'une des revendications 1 à 2, **caractérisé en ce que** la limitation à la croissance maximale (δMₘₐₓ) est supprimée au moment d'atteindre un seuil de vitesse.

4. Procédé selon l'une des revendications 1 à 3, **caractérisé en ce que** la limitation de la croissance (δM_{dr}) à la croissance maximale (δMₘₐₓ) est limitée dans le temps.

5. Procédé selon la revendication 4, **caractérisé en ce que** la limitation à la croissance maximale (δMₘₐₓ) est supprimée après écoulement de la durée.

6. Procédé selon l'une des revendications 1 à 5, **caractérisé en ce que** la valeur maximale (Mₘₐₓ) du couple d'entraînement réel (Mᵢₛₜ) est fixée à la valeur maximale du couple d'entraînement prédéfini par le conducteur.

7. Procédé selon l'une des revendications 1 à 6, **caractérisé en ce que** la limitation de la croissance (δM_{dr}) du couple d'entraînement réel (Mᵢₛₜ) à la croissance maximale (δMₘₐₓ) n'a lieu qu'à partir du moment où un couple d'entraînement nécessaire pour l'arrêt du véhicule sur une pente a été atteint.

8. Procédé selon l'une des revendications 1 à 7, **caractérisé en ce que** lors du démarrage sur une pente, le couple d'entraînement réel (Mᵢₛₜ) est augmenté dans la même mesure qu'est résorbé le moment de freinage dans le véhicule.

9. Régulateur ou contrôleur, comprenant des moyens pour mettre en oeuvre le procédé selon l'une des revendications 1 à 8.

10. Système d'assistance au conducteur, notamment système ESP dans un véhicule équipé d'un régulateur ou d'un contrôleur selon la revendication 9.
